# EUROPEAN PATENT APPLICATION

(11) **EP 1 568 975 A1**
(43) Date of publication of application: **31.08.2005**
(21) Application number: 04004405.9
(22) Date of filing: 26.02.2004
(51) Int. Cl.: G01J 5/06, G01K 13/00

(54) **A probe assembly for an infrared medical thermometer and an infrared medical thermometer**

(71) Applicant: Microlife Intellectual Property GmbH, 9435 Heerbrugg (CH)
(72) Inventor: Chi, Yu-Chiao, Nei-Hu Taipei 114 (TW)
(74) Representative: Müller, Christoph Emanuel

(57) **Abstract**

A probe assembly for an infrared medical thermometer without the necessity to put a plastic film probe cover onto the probe.

The probe assembly includes a plastic probe body (1), an elongated metal made hollow heat sink (2), which holds an infrared sensor unit (4) and conducts the heat increase of the sensor unit (4) during the temperature measurement, a hollow plastic cap (3) tightly fixed between the infrared sensor unit (4), metal heat sink (1), and the inner wall (11) of the probe body (1). Like this, the probe assembly is waterproof and/or airtight, thereby offering an washable probe which can be disinfected after a performed measurement. Therefore, the concern of cross-contamination between patients is reduced.

## Description

The invention relates to a probe assembly for an infrared medical thermometer and an infrared medical thermometer according to the independent patent claims.

For sanitary reasons, most of the current infrared thermometers in the market need a clean, plastic made thin film probe cover to be put onto the thermometer probe body for each temperature measurement. This is especially important for ear thermometers, but is to be considered for forehead thermometers as well.

It is known, that not a few people just skip using the probe cover in view of extra costs and inconvenience. This will not only generate a cross-contamination issue, but also bring an inaccurate reading concern. As probe assemblies which need to be used with a probe cover are not waterproof, they neither prevent earwax or other dirt from falling into the inner side of the probe nor can they be disinfected or cleaned by a sanitary liquid. The dirt accumulated on the probe tip will attenuate the actual incident infrared radiation energy from the tympanic membrane or other measured body target. It therefore results in low reading of the body temperature measuring.

Based on the basic operation theory for an infrared sensor, its DC output voltage is proportional to the difference between the target temperature and the ambient temperature. The temperature of the target to be measured may be the eardrum, or tympanic membrane inside the ear or any other body site adapted to measure the body temperature. The infrared radiation energy of the target will be received and detected by the hot junction of the infrared sensor, while the ambient temperature of the infrared sensor can be treated as the temperature of the sensor's cold junction or as the temperature of the metal container of the sensor.

To have a stable DC voltage output or temperature reading from the infrared sensor, besides the target temperature change, the important influence on the temperature measurement is the variation of the ambient temperature or cold junction temperature inside the sensor. It is therefore important to provide a constant or stable temperature environment for the sensor and its related holder and container materials. However, whenever the probe assembly of the infrared sensor is put in contact with the skin of a patient, there is a rapid temperature increase of the cold junction of the infrared sensor. This results in an immediate sensor output or temperature value change, which brings a very unstable reading of the temperature on the thermometer display. To overcome this, a well designed heat insulating mechanism for the sensor should be provided, such that a constant temperature environment for the cold junction of the sensor would be achieved.

In response to the above, during the past 10 to 15 years, several probe assemblies for infrared thermometers have been designed to provide a stable and accurate temperature measurement and reading.

In U.S. Pat. No. 5,018,872, a probe assembly for infrared thermometer is presented, comprising an elongated outer body, an elongated heat sink, a sensor container, an infrared sensor, a heat conductive shield means, an outer annular cavity between the probe plastic housing body and the cylindrical shield, and an inner annular cavity between the cylindrical shield and the sensor container. All of these components and the construction of the assembly serve to get a better heat insulation of the infrared sensor during the temperature measurement to prevent the sensor from being heated up by the ear canal skin contact.

From US 6,407,205 an infrared thermometer is known, which is adapted to fit into the ear canal of a child. The radiation guide is sealed from contamination, but the probe assembly on the whole needs to be used with a covering sheet.

In EP 1 239 271 an infrared medical thermometer is disclosed, which has as well a probe assembly small enough to fit in a child's ear canal. The probe assembly needs to be used with a probe cover.

All the infrared thermometers with a probe assembly according to one of these designs need a probe cover to be put onto the probe tip to protect the probe from being polluted by earwax or other dirt. The main drawback of such a probe assembly is the difficulty in cleaning the probe. Because of the annular cavity or the air gap surrounding the infrared sensor or being above it, and its related holding mechanism, those thermometers can not be easily cleaned and have a risk of cross-contamination on the one hand and the concern of dirt like earwax or dust falling into the probe assembly's inner part on the other hand.

From US 6,238,089 a probe assembly for an infrared medical thermometer is known, which is sealed such that it is watertight. The design of the probe assembly is quite complex. A stabilizer collar is arranged inside a probe tube, which may by fixed therein with an epoxy or a gasket. Due to this complex design, it is hardly possible to provide a probe assembly which is small enough to fit into the ear canal of a small person as a child, not mentioning for an infant's ear temperature measurement. In addition, the cost for producing this design is quite high.

It is an object of the invention to overcome the drawbacks of the prior art, especially to provide an infrared medical thermometer without necessity of a probe cover, which meets the requirements of hygiene and cleanliness, but is inexpensive and easy to produce.

This object is solved with a probe assembly for an infrared medical thermometer and an infrared medical thermometer according to the independent patent claims.

The probe assembly for an infrared medical thermometer comprises a hollow probe body, a heat sink, an infrared sensor unit and a hollow cap. The probe body and the cap have preferably a low thermal conductivity in comparison with the heat sink which has a high thermal conductivity. The infrared sensor unit comprises a sensor container, preferably made of metal, wherein an infrared sensor is arranged.

Typically, the heat sink is in tight contact to the probe body, the infrared sensor unit and the cap, such that they are sealingly contacting each other. Like this, the probe assembly is waterproof and/or airtight and can be easily disinfected or cleaned, e.g. by wiping the probe part with alcohol swabs or by dipping it into a disinfecting solution. Other embodiments are conceivable, where a watertight construction is achieved by a sealing contact between some of these elements.

To assure high thermal conductivity, the heat sink is preferably made of a metal material, preferably copper or a related metal having a high thermal conductivity. For the probe body and the cap, a plastic material is preferred, which has a low thermal conductivity with soft touch feeling to the skin contact.

It is possible, to make the probe body and the cap as one integral component. It depends on the chosen design or the unit's outer shape appearance consideration, to produce them as one integral component or as two different components.

For an ear thermometer, it is favourable to design the probe assembly such that it comfortably fits into the ear of a patient. Thereby it has to be considered, that the ear hole of a child is smaller than one of an adult.

In a possible embodiment, the probe body has an inwardly protruding flange that is in tight contact with the infrared sensor unit.

An infrared medical thermometer with a probe assembly as described above can be used without an additional probe cover, as it is watertight. It is therefore easier to handle and to clean or disinfect. Further, as there are no additional air gaps inside the probe assembly, the probe tip diameter can be reduced. This probe design can then be made to easily fit into a children's ear canal. The temperature measurement is more accurate an the risk of a cross-contamination is reduced. The probe tip can be cleaned and disinfected e.g. by wiping with alcohol swabs before and/or after each temperature measurement without the concern of bringing any dirt or earwax into the probe assembly's internal construction.

In the following, two embodiments of the invention are described in detail with the accompaniment of figures. Therein show:
- Fig. 1a:: a sectional view of a probe assembly according to the present invention,
- Fig. 1b:: an alternative embodiment of a probe assembly,
- Fig. 2:: an exploded view of the probe assembly of Fig. 1,
- Fig. 3:: a cross-sectional view of Fig. 2,
- Fig. 4a:: a perspective cross-sectional view of the cap and the infrared sensor unit,
- Fig. 4b:: the alternative embodiment according to Fig. 1b in a perspective cross-sectional view,
- Fig. 5a:: a perspective cross-sectional view of the metal heat sink, the cap, and the sensor unit,
- Fig. 5b:: the alternative embodiment according to Fig. 1b and Fig. 4b in a perspective cross-sectional view, and
- Fig. 6:: a perspective cross-sectional view of the entire probe assembly

Referring to Fig. 1a to 3, an elongated hollow probe body 1 forms an outer housing of a tip of an infrared medical thermometer. This probe body 1 is preferably made of a plastic material having a low thermal conductivity and has e.g. a tubular or conical shape. The shape and size may be chosen such that the probe body 1 comfortably fits into the ear canal of an adult or a child. It is also possible, that it is conveniently shaped for temperature measurements on other body parts, e.g. the forehead of a patient. The probe body 1 may directly be connected to the housing of the thermometer (not shown), including the electronics (not shown) and the temperature display (not shown). The design of the thermometer housing and the electronics is conventional and well known in the state of the art.

In both the shown embodiments the probe body 1 has an inwardly protruding flange 7 at its distal end. The plastic cap 3 abuts on this flange 7 such that the probe body 1 and the cap 3 are in a sealing contact.

Inside the probe body 1, there is a metal made hollow heat sink 2, preferably made of copper or a similar metal with a high thermal conductivity. Its front opening is closely fixed between the front annular inner wall 11 of the plastic body 1 and the outer, lateral surface 32 of a plastic cap 3. An infrared sensor unit 4 is supported tightly by the heat sink 2 for maintaining a constant cold junction temperature inside the sensor unit 4. This sensor unit 4 is also tightly covered by the annular plastic cap 3.

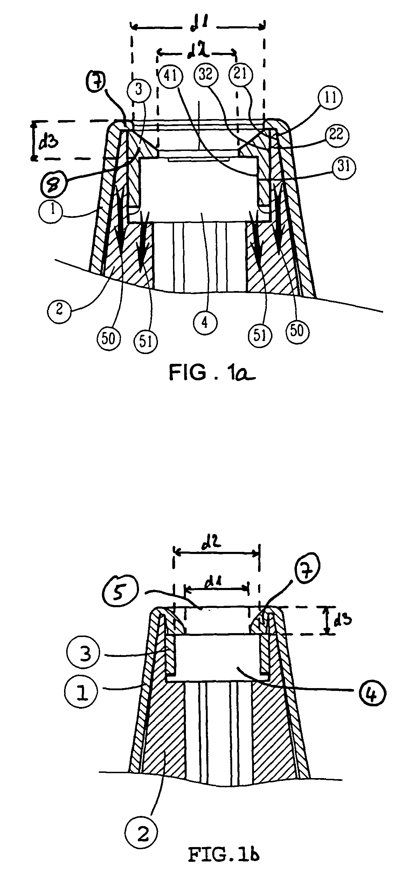

In the embodiment of Fig. 1a, the cap 3 has a forwardly protruding flange 8 covering the metal container of the infrared sensor unit 4 at its forward end. In the embodiment of Fig. 1b the cap 3 is formed as a flat ring, only extending over the lateral surface of the sensor unit 4. The flange 9 of the probe body corresponds to the merged flanges 7 and 8 of Fig. 1a. This flange 9 is again partly covering the infrared sensor unit 4 and is sealingly engaged with it. In both these designs the probe assembly is reliably watertight, the difference lies in the optical appearance and in the manufacturing process.
With an appropriate diameter d1 of the hole 5 on the front end of the plastic body 1 and a diameter d2 of a hole 6 of the plastic cap 3 above the sensor unit 4, the incident infrared radiation can then be received and detected by the sensor unit 4 with an optimized field of view or view angle for the sensor unit 4.

In view of a waterproof design of the probe assembly, there is a tight contact construction between each "Metal-Plastic" interface. This includes the interface between the lateral surface 41 of the sensor unit 4 and the inner wall 31 of the plastic cap 3, the interface between the outer wall 32 of the plastic cap 3 and the inner wall 22 of the front end of the metal heat sink 2, and the interface between the outer surface 21 of the heat sink 2 and the inner wall 11 of the plastic body 1 at its front end. As all the above parts are sized to fit into each other, these parts can be tightly assembled together by using some unique fixture, e.g. they can be glued or welded together or snap into each other. As the plastic material is softer than metal, the entire front end opening of the probe assembly can be performed water- and/or airtight. The plastic material is easily deformed and is sealingly adjusted to the metal parts of the probe assembly.

In terms of the heat sink design for providing a constant temperature to the cold junction of the sensor unit 4 to get a stable and accurate temperature reading, the outer housing of the plastic probe 1 will conduct only little of the heat onto the adjacent metal heat sink 2. The heat sink is made of a metal material with a high heat conductivity and will conduct the heat through heat flow 50 (shown in Fig. 1a) downward to the heat sink base due to its high heat capacity. A very small amount of the interference heat conducted onto the metal container of the sensor unit 4 will be conducted through the surface of the metal container of the sensor unit 4 to the heat sink via heat flow 51 shown in Fig. 1a. Since almost all the interference heat is conducted to the heat sink base, only a very small amount of residual heat will affect the cold junction of the sensor, therefore it can be assured that a stable and accurate measurement of the body temperature takes place.

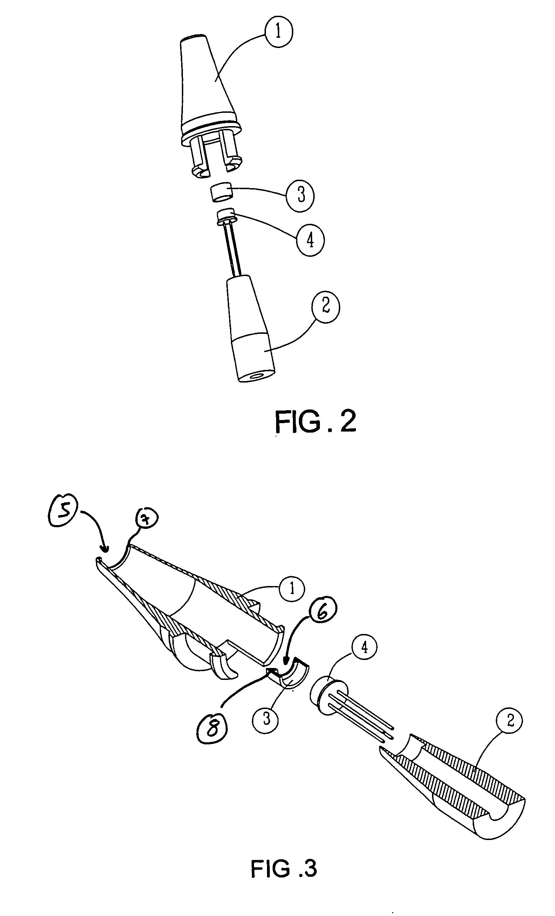

Referring to Fig. 1a and 2, the plastic body 1 and plastic cap 3 can be either one single component or two separate parts, depending on the actual tool design, the industry design of the product overall outer shape or the manufacturing convenience of the probe assembly. Furthermore, to get an airtight or waterproof probe assembly, there are no air gaps on the interfaces between all "Metal-Plastic" contact surfaces inside the probe assembly, especially in the front opening part of the probe assembly, including the interfaces between the outer metal container surface 41 of the sensor unit 4 and the inner wall 31 of the plastic cap 3, the outer wall 32 of the plastic cap 3 and the inner surface 22 of the metal heat sink 2 and the outer surface 21 of the metal heat sink 2 and the forward, inner probe tip wall 11 of the plastic body 1, there are no air gaps.

By adjusting the distance d3 from the top surface of the sensor unit 4 to the probe tip forward opening of the plastic body 1, and varying the hole diameter d2 of the plastic cap 3 and the hole diameter d1 of the plastic body 1, the field of view or the view angle and the sensitivity of the sensor unit 4 can be adjusted. The most suitable size for the depth and the hole diameters d1, d2 mentioned above depends on the sensitivity of the sensor, on the outer shape design of the probe assembly, on the waterproof construction and on the results of laboratory blackbody tests and clinical test data.

In the Fig. 2 and 3, a probe assembly according to the present invention is shown in exploded view. The cap 3 is inserted into the probe body 1 as far as it abuts on the flange 7 of the probe body. The infrared sensor unit 4 is inserted into the probe body 1 and the cap 3 such that it abuts on the flange 8 of the cap 3. The heat sink 2 is inserted into the probe tube 1 such that it fits between the probe tube 1 and the cap 3 at its distal end and supports the sensor unit 4 at the rear end of the sensor unit 4.

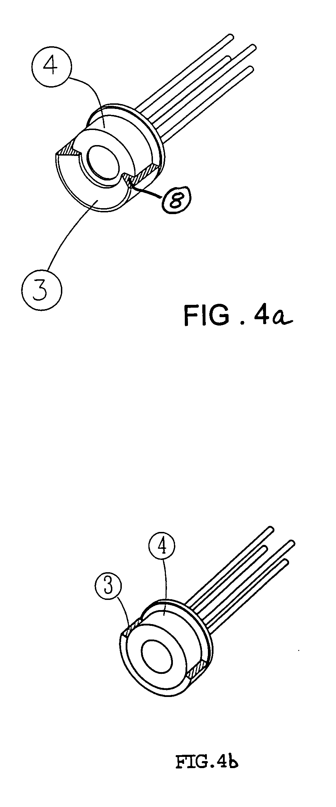

In the Fig. 4a to 6, parts of the probe assembly are shown in a perspective view. The tight surfaces are not seen in detail, but the relative position of the plastic body 1, the heat sink 2, the cap 3 and the sensor unit 4 is visible more clearly.

In the Fig. 4a and 4b. the difference between the two presented embodiments is visible. The cap 3 according to the first embodiment in Fig. 4a has a inwardly protruding flange 8. The sensor unit 4 abuts on this flange 8, the diameter d2 of the hole d3 of the cap defines the viewing angle of the infrared sensor. In the second embodiment according to Fig. 4b the cap has no such flange 8. The cap 3 and the sensor unit 4 contact each other only at the lateral surface 41 of the sensor unit 4.

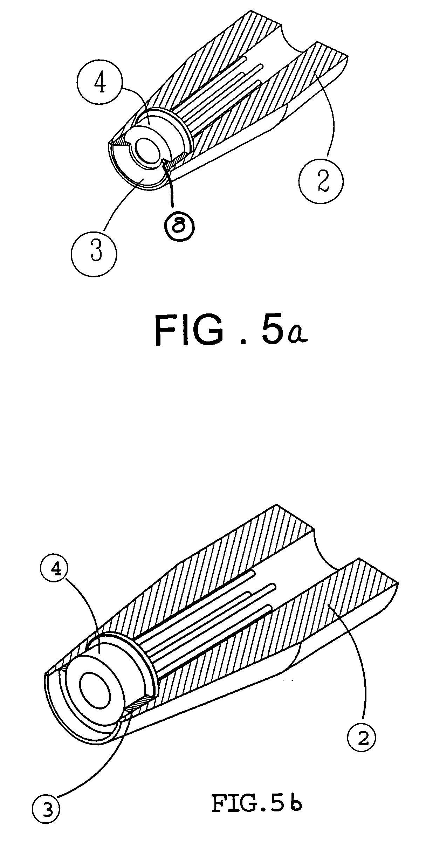

Both the embodiments are shown in Fig. 5a and 5b as well. There, the heat sink 2 is shown as well. The heat sink 2 is in tight contact with the cap 3 in both the embodiments.

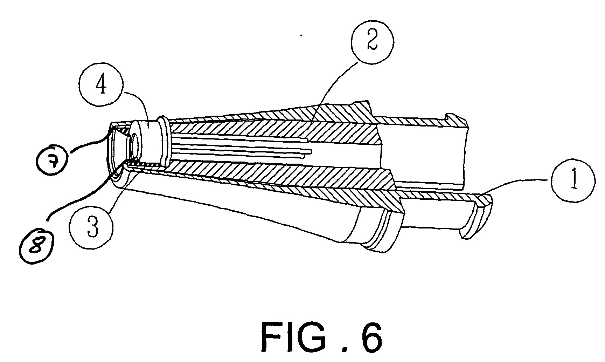

In Fig. 6 the whole probe assembly of the first embodiment is shown. The probe body 1 has a inwardly protruding flange 7 which is in tight contact with the flange 8 of the cap 3.

The previously described probe assembly for an infrared thermometer is suitable for ear thermometers, but not limited on the ear temperature measurement. The probe assembly can be used for forehead thermometers or infrared measurements on other body parts as well.

## Claims

1. A probe assembly for an infrared medical thermometer, comprising a probe body (1), a heat sink (2), an infrared sensor unit (4) and a cap (3) surrounding said unit,
**characterised in that**
at least two parts selected from the heat sink (2),the probe body (1),
the infrared sensor unit (4) and
the cap (3) are in tight contact to each other such as to sealingly contact each other,
whereby the probe assembly is waterproof and/or airtight.

2. A probe assembly according to claim 1, **characterised in that** the heat sink (2) is made of a metal material, preferably copper.

3. A probe assembly according to claim 1 or 2, **characterised in that** the probe body (1) and the cap (3) are made of plastic.

4. A probe assembly according to one of the claims 1 to 3, **characterised in that** the probe body (1) and the cap (3) are made as one integral component.

5. A probe assembly according to one of the claims 1 to 4, **characterised in that** the probe body (1) is designed in size and shape to fit into the ear canal of a patient.

6. A probe assembly according to one of the claims 1 to 5 wherein the heat sink (2), is in tight contact to the probe body (1), the infrared sensor unit (4) is in tight contact to the heat sink (2), and the cap (3) is in tight contact to the probe body (1) and the infrared sensor unit (4).

7. A probe assembly according to one of the claims 1-6, wherein the probe body has an inwardly protruding flange (9) which is in tight contact with the infrared sensor unit (4).

8. An infrared medical thermometer with a probe assembly according to one of the preceding claims.
